# DEMANDE DE BREVET EUROPEEN

(11) **EP 4 666 837 A1**
(43) Date de publication de la demande: **24.12.2025**
(21) Numéro de dépôt: 25182745.7
(22) Date de dépôt: 13.06.2025
(51) Int. Cl.: A01F 15/07

(54) **MACHINE DE MISE EN BALLE, DE TIGES VEGETALES**

(30) Priorité: 21.06.2024 FR 2406721
(71) Demandeur: N.V. Depoortere, 8791 Beveren-Leie (BE)
(72) Inventeur: WOLFCARIUS, Nico, 8720 WAKKEN (BE); LESAGE, Claude, 9052 GENT (BE)
(74) Mandataire: Cabinet Beau de Loménie

(57) **Abrégé**

L'invention concerne une machine (1) de mise en balle ronde de tiges végétales, de préférence sous forme de nappe continue disposée sur le sol. La machine (1) est configurée pour former ladite balle ronde par enroulement en spirale de ladite nappe continue. La machine (1) comporte un moyen de fourniture (200) d'un récepteur radiofréquence (100), de préférence une radio-étiquette telle qu'un récepteur RFID, et le moyen de fourniture (200) est configuré pour insérer le récepteur radiofréquence (100) dans la ou les dernières spires de la balle ronde formée par la machine.

## Description

### Domaine Technique

La présente invention concerne le domaine du traitement de tiges végétales, telles le lin, le chanvre ou toute autre matière végétale. L'invention concerne plus spécifiquement le domaine de la mise en balle d'une nappe continue de tiges végétales, par exemple disposée sur le sol.

### Technique antérieure

Le lin est une plante à fibres. Pour faciliter l'extraction des fibres en vue de leur utilisation notamment dans l'industrie textile, les tiges de lin subissent une opération de rouissage. Cette opération nécessite que, lors de la récolte du lin, après l'arrachage des tiges, celles-ci soient déposées sur le sol sous la forme d'andains, consistant en une nappe continue de tiges parallèles entre elles et alignées dans le sens perpendiculaire à l'avancement de la machine d'arrachage. L'andain est laissé sur le champ pendant une durée suffisante pour que les microorganismes, présents dans le sol, réalisent la dégradation biologique des ciments pectiques qui lient les fibres entre elles. Lorsque cette dégradation est suffisante, le lin est ramassé en vue d'être teillé c'est-à-dire d'être traité dans un site industriel pour l'extraction des fibres et leur nettoyage en vue de leur utilisation dans l'industrie textile.

Il est connu de stocker et de transporter des tiges végétales sous forme de balles agricoles. De telles balles permettent une manipulation facilitée des tiges végétales, notamment d'une nappe continue de tiges végétales, tout en permettant leur déroulage une fois sur le site de destination.

La fabrication d'une balle agricole est obtenue à l'aide d'une enrouleuse automotrice ou tractée, dans le champ, par un engin motorisé. L'enrouleuse est ainsi configurée pour réaliser le ramassage de la nappe végétale, son enroulement sous forme d'une balle ronde puis son enveloppement ou son liage et enfin son expulsion.

Différentes machines de mise en balle ronde d'une nappe végétale sont connues et décrites, par exemple, dans les documents EP1836890, EP1264532 ou EP0064117.

Une fois la balle formée, elle est éjectée de l'enrouleuse sur le champ avant d'être récupérée, dans un second temps, pour être acheminée, avec d'autres balles similaires, jusqu'à un moyen de stockage ou de traitement. Il n'y a donc pas de possibilité, une fois la balle transportée avec d'autres balles similaires, d'avoir des informations relatives aux tiges végétales formant une balle spécifique, telles que le type de tiges, leur position dans le champ, le propriétaire du champ, etc ; ou bien des informations relatives à la mise en balle elle-même, telles que la météo lors de la mise en balle, la date et l'heure de la mise en balle, des données physiques telles que le taux d'humidité, etc.

### Exposé de l'invention

La présente invention vise à résoudre les différents problèmes techniques énoncés précédemment. En particulier, la présente invention vise à proposer un dispositif de mise en balle permettant de fournir des informations sur la balle, en même temps que celle-ci. Plus précisément, la présente invention vise à proposer un dispositif de mise en balle permettant de fournir, de manière fiable, au destinataire de la balle formée, des informations relatives au contenu, à l'origine et/ou aux conditions d'obtention de ladite balle.

Ainsi, selon un aspect, il est proposé une machine de mise en balle ronde de tiges végétales, par exemple disposées sur le sol et de préférence sous forme de nappe continue. La machine est configurée pour former ladite balle ronde par enroulement en spirale des tiges végétales, de préférence de ladite nappe continue. La machine comporte un moyen de fourniture d'un récepteur radiofréquence, de préférence une radio-étiquette telle qu'un récepteur RFID, et le moyen de fourniture est configuré pour insérer le récepteur radiofréquence dans la ou les dernières spires de la balle ronde formée par la machine.

La machine de mise en balle peut indifféremment être désignée en tant qu'enrouleuse de tiges végétales, notamment disposées sur le sol sous forme de nappe continue, ou en tant que dispositif d'enroulement de tiges végétales, notamment disposées sur le sol sous forme de nappe continue, en balle. La machine de mise en balle peut être utilisée pour mettre en balle : des tiges disposées au sol, ou bien des tiges teillées, ou fibres, obtenues à l'issue d'un procédé de teillage.

Ainsi, la machine selon la présente invention, permet d'ajouter un élément électronique d'enregistrement de données, typiquement un récepteur RFID, afin de permettre à une personne réceptionnant une balle comportant un tel récepteur, d'avoir des informations relatives au contenu de la balle en question. En particulier, le choix d'un récepteur radiofréquence permet de récupérer les informations à distance, sans contact. Il est alors possible de positionner le récepteur à l'intérieur de la balle, et non en surface, pour en limiter les risques de perte ou de dégradation lors du transport de la balle. De plus, la récupération des données se faisant à l'aide d'un appareil de lecture à distance, le récepteur radiofréquence n'a pas besoin d'avoir une taille conséquente pour être retrouvé au sein de la balle et être lu, mais peut au contraire avoir une taille réduite tout en restant détectable par le lecteur, ce qui permet de limiter son impact sur la composition de la balle.

Les données contenues dans le récepteur radiofréquence peuvent concerner l'origine des tiges enroulées en balle (localisation géographique, fournisseur, etc) ou bien la qualité des tiges enroulées (andain positionné en milieu de champ ou au contraire en bordure de champ), ou bien la date d'enroulement des tiges, des données physiques telles que le taux d'humidité, etc. Alternativement, le récepteur radiofréquence peut comporter un lien, unique ou générique, permettant d'accéder à de telles informations disponibles sur un serveur distant.

En particulier, il est alors possible d'indiquer à la personne réceptionnant la balle, l'origine des tiges de ladite balle. Par exemple, il est possible d'indiquer le propriétaire du champ d'où sont issues les tiges, et le type de tiges en question. Il est également possible de mentionner des données de géolocalisation indiquant la position des tiges dans le champ : par exemple au centre du champ ou, au contraire, le long d'une bordure du champ où la qualité des tiges peut être plus faible ou bien la quantité de poussière plus grande.

Il est également possible de préciser les conditions de ramassage et de mise en balle des tiges. Ainsi, le récepteur radiofréquence peut comporter des données d'horodatage pour indiquer la date, et éventuellement l'heure, à laquelle les tiges ont été enroulées en balle. Il est également possible de préciser les conditions météorologiques au moment du ramassage, pour permettre de mieux estimer la qualité des tiges dans la balle en question.

Préférentiellement, le récepteur radiofréquence comprend une puce électronique et une antenne radiofréquence reliée à ladite puce électronique.

La puce électronique permet de stocker, sous forme d'informations binaires, les différentes données à transmettre avec la balle. L'utilisation d'une puce électronique permet notamment de pouvoir stocker une quantité de données importantes, par comparaison avec une étiquette physique comportant des informations marquées dessus, et de pouvoir les restituer de manière fiable et robuste. En particulier, l'utilisation d'une puce de taille réduite insérée dans la balle permet de limiter les risques de détériorations ou de pertes de données par rapport à une étiquette physique.

L'antenne radiofréquence permet de communiquer à distance avec la puce électronique. L'antenne radiofréquence facilite notamment la lecture des informations du récepteur radiofréquence, en permettant une communication à distance entre ledit récepteur radiofréquence et un lecteur radiofréquence. L'antenne radiofréquence permet avant tout d'avoir une communication avec la puce électronique, sans nécessiter de retrouver au préalable le récepteur radiofréquence dans la balle.

Préférentiellement, la machine comprend des moyens de ramassage configurés pour prélever les tiges végétales sur le sol, de préférence sous forme de nappe continue, et des moyens de mise en forme de la balle ronde à partir des tiges végétales, de préférence à partir de ladite nappe continue, montés en aval des moyens de ramassage.

La machine de mise en balle est configurée pour former la balle à partir de l'andain disposé sur le sol. A cet effet, la machine de mise en balle comprend d'une part des moyens de récupération de l'andain présent sur le sol (moyens de ramassage) et d'autre part des moyens d'enroulement dudit andain en spirale (moyens de mise en forme).

Les moyens de ramassage peuvent comprendre un pick-up, par exemple avec doigts rétractables, configuré pour ramasser l'andain sur le sol et l'acheminer vers le reste de la machine de mise en balle. Les moyens d'enroulement dudit andain sont configurés, quant à eux, pour enrouler en spirale l'andain fourni par les moyens de ramassage. Les moyens d'enroulement peuvent également être configurés pour tasser, ou presser, la spirale lors de sa formation, et pour lier la balle, une fois formée.

Préférentiellement, le moyen de fourniture est monté en aval des moyens de ramassage, et de préférence en amont des moyens de mise en forme de la balle ronde.

Le récepteur radiofréquence est ainsi positionné dans les tiges végétales après leur ramassage par la machine de mise en balle, mais avant leur enroulement en spirale par les moyens de mise en forme. Le positionnement du récepteur radiofréquence après le ramassage limite les risques de perte ou de chute dudit récepteur radiofréquence lors du ramassage de l'andain sur le sol. Par ailleurs, le positionnement du récepteur radiofréquence dans les tiges végétales, avant leur enroulement en spirale, permet une insertion aisée dudit récepteur au sein de la spirale. En particulier, l'insertion du récepteur radiofréquence dans la balle peut alors avoir lieu sans avoir à agir directement sur la balle formée, ce qui pourrait l'abîmer les tiges ou compliquer l'insertion du récepteur.

Préférentiellement, la machine comprend également un lecteur radiofréquence configuré pour lire le récepteur radiofréquence après son insertion dans la balle ronde en formation, ou bien dans la balle ronde formée par la machine.

La présence du lecteur radiofréquence dans la machine de mise en balle, permet de s'assurer que le lecteur radiofréquence de la balle en formation ou formée, est bien présent dans la balle et est correctement détecté et lu par un lecteur. Il s'agit d'une vérification du récepteur inséré dans la balle qui peut se faire de manière simple et automatique, au sein même de la machine de mise en balle.

Préférentiellement, le lecteur radiofréquence est configuré pour lire le récepteur radiofréquence après son insertion dans la balle ronde en formation, et le moyen de fourniture est configuré pour insérer un deuxième récepteur radiofréquence dans la ou les dernières spires de la balle ronde formée par la machine, lorsque le premier récepteur radiofréquence ne peut pas être lu par le lecteur radiofréquence.

Grâce au lecteur radiofréquence, il est possible de s'assurer que le récepteur radiofréquence a été correctement positionné dans la balle, durant sa formation. Le lecteur radiofréquence permet également, lorsque le récepteur n'est pas détecté ou n'est pas lu correctement, de prévenir le moyen de fourniture pour qu'il insère un autre récepteur radiofréquence dans la balle, avant que celle-ci ne soit terminée. Il est alors possible non seulement de vérifier le bon fonctionnement du récepteur radiofréquence, mais également d'en insérer un nouveau en cas d'anomalie.

Préférentiellement, le lecteur radiofréquence est monté à proximité des moyens de mise en forme de la balle ronde ou en sortie de la machine.

Le lecteur radiofréquence est positionné dans la machine de mise en balle, et de préférence au plus près de la balle en formation, afin de permettre rapidement l'insertion d'un autre récepteur radiofréquence dans la balle, si le premier n'est pas correctement détecté et/ou lu par le lecteur. Ainsi, le lecteur peut être positionné à côté des moyens de mise en forme. Alternativement, ou cumulativement, il est peut être positionné à proximité de la sortie de la machine de mise en balle, pour vérifier le bon fonctionnement du récepteur radiofréquence avant que la balle ne soit libérée par la machine de mise en balle.

Préférentiellement, la machine comprend également un moyen d'écriture configuré pour enregistrer des informations sur le récepteur radiofréquence, de préférence avant ou après son insertion dans la balle ronde formée par la machine.

Le moyen d'écriture est destiné à enregistrer les informations voulues dans le récepteur radiofréquence. Le moyen d'écriture peut être intégré dans le moyen de fourniture, de manière à enregistrer les informations dans le récepteur radiofréquence avant que celui-ci ne soit inséré dans la balle en formation. Alternativement, ou cumulativement, le moyen d'écriture peut être intégré dans le lecteur radiofréquence : ainsi, lors de la vérification de la bonne détection et lecture du récepteur radiofréquence par le lecteur, il est possible d'y enregistrer les données relatives à la balle en formation. On évite ainsi que des récepteurs radiofréquences perdus ou déficients, ne comprennent des informations qui ne sont plus pertinentes. Au contraire, avec un moyen d'écriture intégré dans le lecteur radiofréquence, on s'assure du bon fonctionnement et du bon positionnement du récepteur radiofréquence dans la balle, avant d'y enregistrer les informations voulues. Alternativement, le récepteur radiofréquence peut comporter un lien, unique ou générique, permettant d'accéder à de telles informations disponibles sur un serveur distant.

Préférentiellement, le moyen de fourniture est configuré pour déposer le récepteur radiofréquence sur les tiges végétales, de préférence sur la nappe continue.

Le moyen de fourniture est de préférence positionné entre les moyens de ramassage et les moyens de mise en forme. Ainsi, le moyen de fourniture peut être configuré pour laisser, sur les tiges végétales ramassées, le récepteur radiofréquence afin que celui-ci soit enroulé avec les tiges végétales, dans la spirale formant la balle. L'insertion du récepteur radiofréquence n'implique donc aucune action ou modification des tiges végétales : elles ne sont ni déformées ni déplacées par le récepteur radiofréquence. Au contraire, le récepteur radiofréquence est simplement posé sur elles avant leur enroulement, pour être entraîné avec elles vers les moyens de mise en forme.

Préférentiellement, le moyen de fourniture est configuré pour positionner le récepteur radiofréquence dans une portion de la balle qui n'est pas destinée à être sous les fils de liage de la balle terminée, par exemple pour positionner le récepteur radiofréquence entre deux fils de liage de la balle terminée. Dit autrement, la balle comprend des fils de liage, et le récepteur radiofréquence est positionné entre les fils de liage.

Il est ainsi possible de limiter les risques d'endommagement du récepteur radiofréquence dus aux contraintes appliquées par les fils de liage sur les tiges végétales, dans la balle terminée.

Préférentiellement, le récepteur radiofréquence est en matière recyclable, et/ou compostable.

Le récepteur radiofréquence a pour principal avantage de permettre une identification et une lecture à distance, sans nécessiter de le retrouver au préalable dans la balle de tiges végétales. Ainsi, le récepteur radiofréquence peut être amené à rester avec les tiges végétales, même après le déroulage de la balle, voire même après leur teillage. Afin de limiter l'impact d'un tel récepteur sur les tiges, celui-ci peut comprendre principalement des matières recyclables et/ou compostables, voire être constitué principalement des matières recyclables et/ou compostables. Par exemple, le récepteur radiofréquence peut comprendre un support en matières recyclables et/ou compostables.

Préférentiellement, le récepteur radiofréquence est destiné à émettre un signal de réponse lorsqu'il est interrogé par un lecteur distant correspondant, notamment RFID.

La réponse du récepteur radiofréquence, permet de l'identifier comme tel, voire d'évaluer la qualité de la communication avec lui, avant, éventuellement, d'y enregistrer ou d'y lire des données.

Selon un autre aspect, il est également proposé un engin motorisé, par exemple un engin agricole tel qu'un tracteur, comportant une machine de mise en balle ronde telle que décrite précédemment.

Préférentiellement, la machine est montée, par des moyens d'attache, à l'arrière de l'engin motorisé.

### Brève description des dessins

[Fig. 1] La figure 1 est une représentation schématique, très simplifiée, vue de côté, de la machine ;
[Fig. 2] La figure 2 est une vue schématique, très simplifiée, en vue partielle de dessus de l'intérieur de la machine de la figure 1 selon l'axe II-II et ; et
[Fig. 3], [Fig. 4], [Fig. 5], [Fig. 6], [Fig. 7], [Fig. 8], [Fig. 9], [Fig. 10], [Fig. 11] et [Fig. 12] Les figures 3 à 12 illustrent, en dix représentations, la formation de la balle, son transfert jusqu'à la chambre arrière et son évacuation.

### Description des modes de réalisation

La machine de mise en balles rondes d'une nappe végétale sera plus simplement dénommée enrouleuse 1 dans la suite du texte. Dans l'exemple décrit ci-dessous, l'enrouleuse 1 est tractée ou automotrice (ou autotractée). Toutefois, l'invention peut également s'appliquer à une enrouleuse immobile, ou fixe, par exemple à une enrouleuse positionnée dans une ligne de teillage, notamment en fin de ligne de teillage, pour enrouler des tiges traitées, ou fibres teillées, en balles.

La présente enrouleuse 1 a pour fonction de ramasser les matières végétales se présentant sous la forme d'une nappe 3 qui sont disposées sur le sol 2 après la récolte. Il peut s'agir notamment de matières végétales fibreuses, telles que des tiges de lin, de chanvre ou de kénaf mais également de tous types de matières végétales connus pour pouvoir être enroulés sous forme de balles rondes, par exemple de la paille, de la luzerne.

L'enrouleuse 1 comporte, à sa partie avant, des moyens de ramassage 4, généralement dénommé pick-up, qui dans l'exemple illustré sont constitués par un cylindre 5 muni de doigts rétractables 6, aptes à prélever la nappe 3 du sol 2 et la transporter vers la chambre de formation de la balle 7. La chambre de formation 7 est délimitée par des moyens de mise en forme de la balle, en l'occurrence : un cylindre cannelé 8, un rouleau de renvoi 9, une portion de courroies 10 qui est dénommée ci-après zone de formation 10a et qui s'étend entre un rouleau amont 11 et un rouleau aval 12. Le cylindre cannelé 8 et le rouleau fixe 9 tournent tous les deux, autour de leur axe, dans le sens de la flèche F1, tandis que les courroies 10 se déplacent, à contresens, selon la flèche F2. Les moyens de mise en forme de la balle (8, 9, 10a) sont donc configurés pour former la balle dans la chambre de formation 7, à partir de la nappe de tiges 3 alimentant l'enrouleuse 1.

L'enrouleuse 1 comporte un châssis 13 qui est constitué de deux tôles verticales en acier reliées par des entretoises, formant la structure de l'enrouleuse. C'est entre ces deux tôles que sont fixés tous les rouleaux, mobiles autour de leur axe de rotation, transversal aux deux tôles, qui supportent et entraînent les courroies 10. Certains de ces rouleaux ont un positionnement fixe par rapport au châssis, tandis que d'autres sont déplaçables.

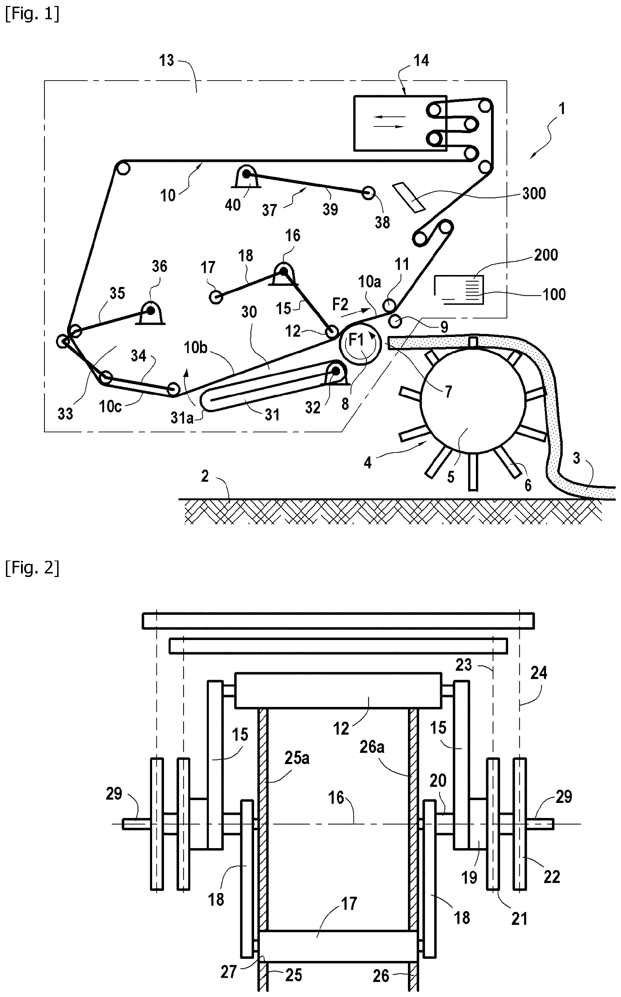

Les courroies 10 sont en l'occurrence constituées d'un jeu de quatre à six courroies, parallèles entre elles, réparties à égale distance l'une de l'autre sur la longueur des rouleaux, ou bien d'un tapis unique, en fonction de la matière à enrouler. Un dispositif de tension 14 dont la trajectoire est linéaire comme dans l'exemple de la figure 1, mais qui peut également être en arc de cercle, assure une tension définie, constante et réglable sur les courroies 10.

Dans le présent texte, les termes amont et aval sont pris en considération du sens de déplacement de la balle à l'intérieur de l'enrouleuse 1.

Dans la chambre de formation 7, le rouleau de renvoi 9 se trouve en amont du cylindre cannelé 8, de même que le rouleau amont 11 se trouve en amont du rouleau aval 12. Le rouleau amont 11 est fixe, tandis que le rouleau aval 12 est déplaçable, étant monté pivotant à l'extrémité de deux bras latéraux 15, l'autre extrémité des deux dits bras latéraux étant pivotant autour d'un axe théorique de rotation 16. De plus il est prévu selon l'invention un second rouleau aval de substitution 17 qui est également monté à pivotement sur deux bras latéraux 18, ayant le même axe théorique de rotation 16 que les deux bras latéraux 15 supportant le premier rouleau aval 12. En pratique, les deux jeux 15, 18 de bras latéraux sont montés sur deux arbres coaxiaux respectivement 19 pour les bras latéraux 15 et 20 pour les bras latéraux 18 (figure 2). Les deux arbres coaxiaux 19, 20 sont équipés de moyens de déplacement indépendants, s'agissant par exemple d'un entraînement par poulie 21, 22 et par chaîne 23, 24. Chacun des premier 12 et second 17 rouleaux aval peut donc être déplacé indépendamment de l'autre, dans le sens des aiguilles d'une montre ou à contresens.

La chambre de formation 7 est délimitée latéralement par deux plaques de maintien 25, 26, partiellement visibles sur la figure 2. Ces deux plaques sont disposées entre les bras latéraux 18, les moins écartés, de manière à ce que lesdits bras ne soient pas une gêne pour la formation de la balle comme cela va être vu ci-après. C'est dans l'espace qui s'étend de part et d'autre des plaques de maintien 25, 26 jusqu'aux tôles du châssis 13 que se trouvent toutes les parties mécaniques de l'enrouleuse 1. Comme cela apparaît clairement à l'examen de la figure 2, les extrémités des deux rouleaux aval 12, 17 doivent nécessairement passer à travers les deux plaques de maintien 25, 26 lors de leur déplacement circulaire. Pour cela, les plaques de maintien 25, 26 sont percées de deux ouvertures annulaires 27 dont la largeur est déterminée pour permettre le passage ajusté des rouleaux 12, 17. La partie circulaire 25a, 26a des deux plaques 25, 26 qui s'étend sur l'intérieur de l'ouverture annulaire 27 est maintenue en position grâce à une entretoise 29 passant à travers les arbres coaxiaux 19, 20, ladite entretoise 29 étant fixée sur le châssis 13. Les portions circulaires 25a, 26a sont donc supportées en porte-à-faux par rapport audit châssis 13.

Pour éviter que les matières végétales puissent passer à travers l'ouverture annulaire 27, ladite ouverture est obturée au moins partiellement par des pièces d'obturation non représentées, s'étendant entre les deux rouleaux aval 12, 17 et aptes à coulisser sous la poussée desdits rouleaux 12, 17 lors du déplacement de ceux-ci dans l'ouverture 27. Il s'agit de pièces d'obturation réalisées dans une matière dont le coefficient de frottement est faible, s'agissant notamment d'un plastique rigide, d'une pièce en bronze ou éventuellement d'une pièce en métal avec des moyens de graissage.

L'enrouleuse 1 comporte également, en aval de la chambre de formation 7, une chambre de transfert 30 qui est délimitée par une portion 10b des courroies 10, dénommée zone de transfert, et un dispositif d'entraînement 31, qui est constitué par un tapis roulant ou une succession de rouleaux. Ce dispositif d'entraînement 31, qui s'étend sous la zone de transfert 10b, est monté oscillant autour d'un axe de rotation 32, entre une position de transfert, telle qu'illustrée à la figure 1, dans laquelle il présente une certaine inclinaison vers le bas, depuis l'amont vers l'aval, et une position de blocage dans laquelle il est sensiblement horizontal.

L'enrouleuse 1 comporte également, en aval de la chambre de transfert 30, une chambre arrière 33 qui est délimitée par une portion 10c de la courroie 10 s'étendant au-delà de la chambre de transfert 30. Cette chambre arrière 33 sert notamment à l'enveloppement ou au liage de la balle terminée. C'est de cette chambre arrière 33 qu'est évacuée la balle une fois enveloppée, vers l'extérieur de l'enrouleuse 1.

Pour cette évacuation, il est prévu une trappe 34, donnant sur la chambre arrière 33 et montée à pivotement, par exemple grâce à deux bras latéraux 35, autour d'un axe 36, transversal aux tôles verticales constituant le châssis 13. Cette trappe 34 peut adopter, lors de son pivotement autour de l'axe 36, une position fermée, comme illustrée à la figure 1, dans laquelle elle supporte la balle terminée et une position ouverte dans laquelle elle permet l'évacuation de celle-ci hors de l'enrouleuse 1, la balle tombant alors sur le sol 2.

L'enrouleuse 1 comporte enfin un dispositif de poussée 37 qui est déplaçable en sorte de s'appliquer sur la face intérieure des courroies 10, au niveau de la zone de formation 10a, et de repousser lesdites courroies pour aider au déplacement de la balle terminée depuis la chambre de formation 7 vers la chambre de transfert 30 et éventuellement vers la chambre arrière 33. Ce dispositif de poussée 37, dans l'exemple illustré, comporte un rouleau 38, qui est monté entre deux bras latéraux 39 aptes à pivoter autour d'un axe 40 monté transversalement aux tôles verticales du châssis 13.

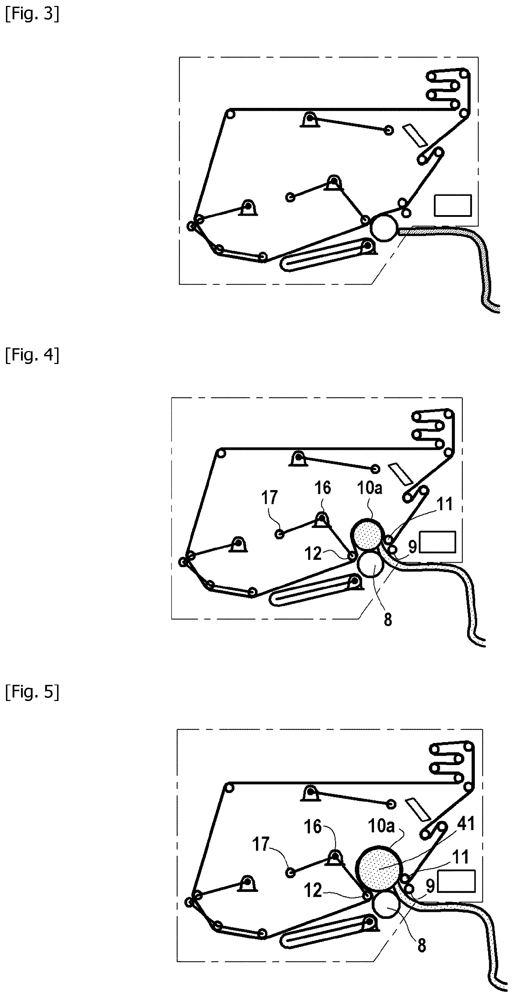

Le fonctionnement de l'enrouleuse 1 va être décrit en relation avec les figures, la figure 3 illustrant la disposition des différents éléments avant l'introduction de la nappe 3.

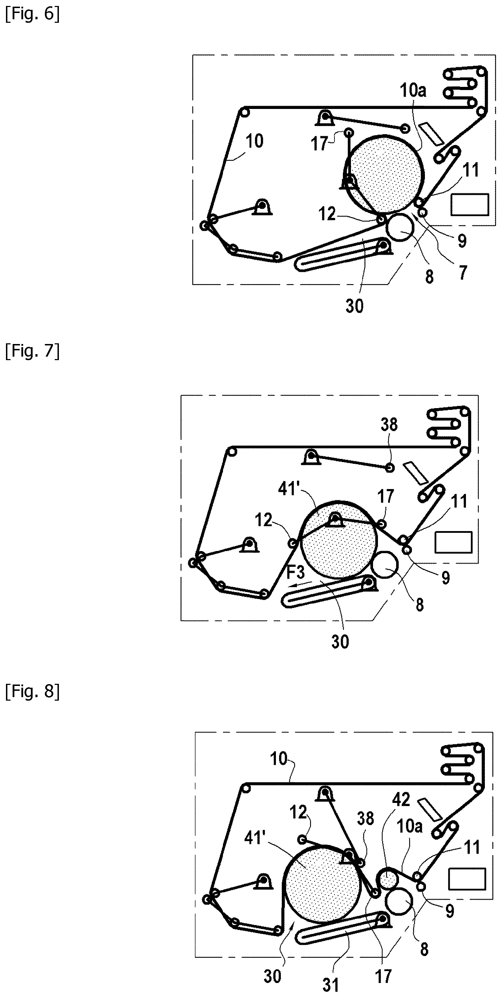

La nappe végétale 3 qui est prélevée par le pick-up 4 pénètre dans la chambre de formation 7 (figure 1). Elle rencontre tout d'abord le cylindre cannelé 8 qui l'entraîne vers la zone de formation 10a des courroies 10. Ces courroies 10, tournant en sens inverse du cylindre cannelé 8, repoussent la nappe 3 selon la flèche F2. Ladite nappe 3, remontant de l'aval vers l'amont la zone de formation 10a, rencontre le rouleau de renvoi 9 qui la repousse de nouveau, ce qui permet d'initier la première spire de la première balle. La nappe 3 est donc amenée à tourner, sur l'exemple illustré sur les figures, dans le sens des aiguilles d'une montre pour former les spires. Les autres spires se forment spontanément autour de la première spire, dans la chambre de formation 7 (figure 4). Lors de l'accumulation des spires et donc du grossissement de la première balle 41 (figure 5), la longueur de la zone de formation 10a augmente, grâce au déplacement du dispositif de tension 14. Pendant la formation de la première balle 41, le second rouleau aval 17, qui était escamoté est amené à se déplacer dans le sens des aiguilles d'une montre jusqu'à venir sur l'arrière de la zone de formation 10a, à l'opposé du cylindre cannelé 8 (figure 6).

Lorsque le diamètre de la première balle 41 approche une valeur prédéterminée correspondant au diamètre final souhaité pour la balle formée, et qu'il ne reste que quelques spires à enrouler avant que la balle n'atteigne la taille souhaitée, un récepteur radiofréquence, tel une radio-étiquette 100, est inséré dans la balle en formation. Une telle radio-étiquette 100 est destinée à fournir des informations relatives à la balle en formation, pouvant être simplement et rapidement lues par un lecteur positionné à proximité de la radio-étiquette, mais sans nécessiter de contact avec ladite radio-étiquette. La radio-étiquette 100 peut être formée par une puce électronique, dans laquelle sont stockées les informations à transmettre, et par une antenne radiofréquence reliée à la puce électronique et configurée pour permettre une communication entre la puce électronique et un moyen de lecture et/ou d'écriture. La puce et l'antenne peuvent notamment être disposées sur un support permettant la manipulation de la radio-étiquette 100, de préférence un support comprenant ou constitué de matières recyclables et/ou compostables.

La radio-étiquette 100 peut ainsi comprendre différents types d'informations, telles que l'origine des tiges enroulées en balle (localisation géographique, fournisseur, etc) ou bien la qualité des tiges enroulées (andain positionné en milieu de champ ou au contraire en bordure de champ), ou bien la date d'enroulement des tiges. De telles informations peuvent être importantes pour évaluer la qualité des tiges formant la balle, ou la quantité de poussières susceptibles de se disperser dans l'air lors du déroulage de la balle, et sont difficiles à évaluer autrement, avant ouverture de la balle. La radio-étiquette 100 permet donc de transmettre de telles informations de manière fiable, tout en gardant une taille limitée ayant un faible impact sur la qualité des tiges de la balle.

En particulier, la radio-étiquette 100 peut être configurée pour comprendre principalement, voire être constituée, de matière recyclable et/ou compostable. De cette manière, même si la radio-étiquette 100 n'est pas récupérée ou retirée de la balle ou des tiges à l'issue du procédé de traitement des tiges, la dégradation de celle-ci n'aura qu'un impact mineur sur la qualité des tiges, ou sera évacué, selon le procédé, vers des co-produits mineurs, voire des déchets.

A cet effet, l'enrouleuse 1 peut comprendre un moyen de fourniture 200 configuré pour délivrer une telle radio-étiquette 100 dans la balle en formation. Le moyen de fourniture 200 est ainsi positionné entre les moyens de ramassage 4 et les moyens de mise en forme de la balle (8, 9, 10a). Dit autrement, le moyen de fourniture 200 agit sur la nappe de tige 3 après que celle-ci ait été ramassée mais avant que celle-ci n'ait été enroulée en spirale. Lorsque l'enrouleuse 1 est en train de former la ou les dernières spirales de la balle ronde, le moyen de fourniture 200 est configuré pour positionner dans la balle, de préférence est configuré pour déposer sur la nappe de tige 3 circulant entre les moyens de ramassage 4 et les moyens de mise en forme, une radio-étiquette 100.

Par exemple, le moyen de fourniture 200 peut recevoir un signal du dispositif de tension 14, et déposer une radio-étiquette 100 sur la nappe 3 lorsque le dispositif de tension 14 indique que la balle en formation a atteint un diamètre voulu. Ainsi, le déclenchement du moyen de fourniture 200 est lié au fonctionnement de l'enrouleuse 1, et notamment à la progression de la formation de la balle. Alternativement, ou cumulativement, le moyen de fourniture 200 peut recevoir des signaux d'autres moyens, par exemple de capteurs de position du premier rouleau aval 12 et/ou deuxième rouleau aval 17, ou de tout autre capteur configuré pour détecter ou pour estimer la taille de la balle en formation.

Une fois la radio-étiquette 100 positionnée dans la spirale de la balle en formation, l'enrouleuse 1 peut également comprendre un lecteur radiofréquence 300 configuré pour détecter et lire ladite radio-étiquette 100. Le but du lecteur radiofréquence 300 est de vérifier que ladite radio-étiquette 100 est bien présente dans la balle en formation, et peut être correctement lue. Ainsi, le lecteur radiofréquence 300 est avantageusement monté dans l'enrouleuse 1 à proximité des moyens de mise en forme (8, 9, 10a). Le lecteur radiofréquence 300 peut ainsi être positionné à proximité du rouleau de poussée 38, de manière à pouvoir détecter et lire la radio-étiquette 100 dès que celle-ci est intégrée dans la spirale de la balle en formation.

Le lecteur radiofréquence 300 peut avantageusement comporter un moyen d'écriture configuré pour écrire les données à transmettre avec la balle, dans la radio-étiquette 100, et plus particulièrement dans la puce électronique. La présence du moyen d'écriture dans le lecteur radiofréquence 300 permet de s'assurer que les données relatives à la balle en cours de formation ne sont insérées dans la radio-étiquette 100 uniquement lorsque celle-ci est intégrée et détectée dans la balle en formation. On s'assure ainsi que les informations indiquées dans la radio-étiquette 100 correspondent bien à la balle en cours de formation.

Alternativement, il est également possible de prévoir le moyen d'écriture dans le moyen de fourniture 200. Dans ce cas, les données sont écrites dans la radio-étiquette 100 avant que celle-ci ne soit placée dans la balle en question : la préparation et l'écriture de la radio-étiquette 100 sont effectuées en amont de son insertion dans la balle en formation. Le lecteur radiofréquence 300 peut alors permettre de s'assurer que les données de la radio-étiquette sont correctes et lisibles.

Si les informations contenues dans la radio-étiquette 100 n'étaient pas lisibles par le lecteur radiofréquence 300, ou si la radio-étiquette 100 n'était pas détectée par le lecteur radiofréquence 300, alors le moyen de fourniture 200 est configuré pour fournir une nouvelle radio-étiquette 100 pour la balle en cours de formation. La première radio-étiquette 100 étant placée, puis lue par le lecteur radiofréquence, dans la balle en cours de formation, il est alors possible d'insérer une deuxième étiquette radio-fréquence 100 dans la balle, si la première ne permet pas de récupérer les informations devant être transmises avec la balle.

Une telle possibilité permet donc de rendre plus fiable la transmission de données, et de limiter les risques de fabrication de balles sans radio-étiquette 100 opérationnelle.

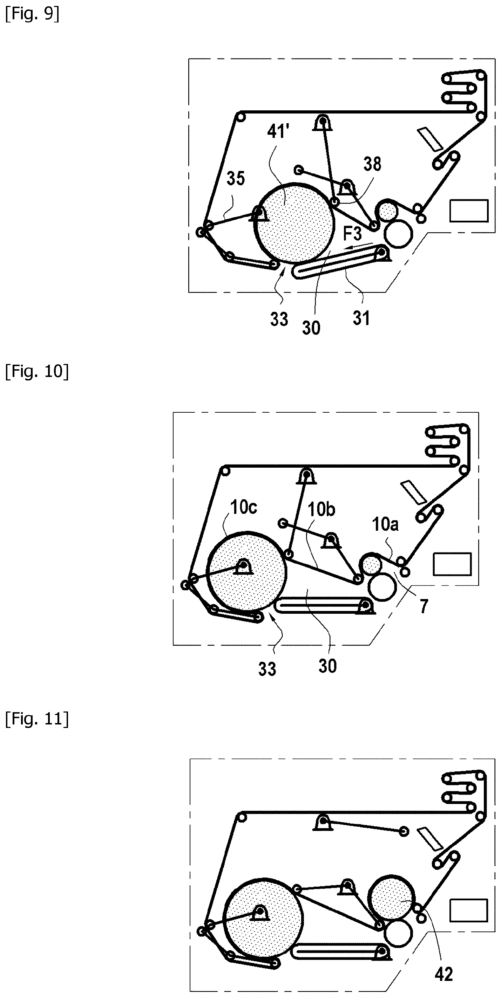

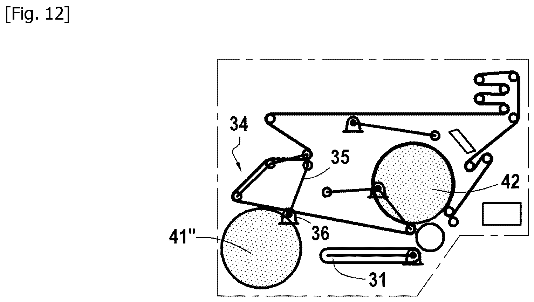

Lorsque le diamètre de la première balle 41 atteint ladite valeur prédéterminée souhaitée pour le diamètre final de la balle formée, la première balle terminée 41' est évacuée de la chambre de formation 7 vers la chambre de transfert 30. Pour cela, les deux rouleaux aval 12, 17 se déplacent en même temps. Le premier rouleau aval 12, s'escamote en se déplaçant dans le sens des aiguilles d'une montre (figure 7), jusqu'à dégager un passage suffisant pour que la première balle terminée 41' puisse basculer sur le dispositif d'entraînement 31, passant dans la chambre de transfert 30 (figure 8). Dans le même temps, d'une part le second rouleau 17 aval poursuit son déplacement dans le même sens jusqu'à venir se placer dans la même position qu'avait le premier rouleau aval 12 pendant la formation de la première balle 41 et d'autre part le rouleau de poussée 38 se déplace jusqu'à venir en appui sur la face intérieure des courroies 10 dans la zone de transfert et repousser la première balle terminée 41' pour l'aider dans son basculement vers le dispositif d'entraînement (figure 8). Le dispositif d'entraînement 31 entraîne la première balle terminée vers la chambre arrière 33, par sa rotation (flèche F3) et son inclinaison, étant en cela aidé par le rouleau de poussée 38 qui poursuit son déplacement (figure 9), jusqu'à ce que la première balle terminée 41' soit en appui sur la trappe 34 (figure 10) qui est en position fermée. Le rouleau de poussée 38 retourne alors dans sa position initiale tandis que le premier rouleau aval 12 se déplace, de sa position escamotée (figure 8), en sens inverse pour prendre la place qu'avait le rouleau de poussée 38 (figure 11), repoussant la première balle terminée 41' pour éviter qu'elle ne revienne vers la chambre de transfert. Dans cette position (figure 11), la première balle terminée 41' est maintenue en place par le premier rouleau aval 12 et par l'extrémité aval 31a du dispositif d'entraînement 31, qui a pivoté vers le haut dès que la première balle terminée 41' est arrivée sur la trappe 34 (figure 10). C'est dans cette position que peut intervenir l'opération d'enveloppement ou de liage de la première balle terminée 41'. Bien sûr, dès que le second rouleau aval 17 a pris la place qu'avait le premier rouleau aval 12 dans la zone de formation, la seconde balle 42 a commencé à se former (figure 8) et à grossir (figure 11). Avant que la seconde balle 42 n'atteigne le diamètre requis, l'opération d'enveloppement ou de liage étant terminée, la première balle terminée enveloppée ou liée 41" est évacuée de la chambre arrière 33, grâce à l'ouverture de la trappe 34, qui bascule autour de son axe 36 (figure 12). Et le cycle peut reprendre (figure 6) pour le transfert de la seconde balle 42 terminée vers la chambre de transfert et la chambre arrière et pour la formation de la balle suivante, tous les éléments revenant dans leur position initiale (figure 3).

On comprend que les chambres de formation, de transfert et arrière n'occupent pas un espace défini, mais un espace variable en fonction de la présence ou de l'absence de la balle, et en fonction de l'état de grossissement de celle-ci. La variation de cet espace est obtenue grâce à la variation de la longueur des courroies dans la zone délimitant cet espace.

Tout le séquencement du cycle de fonctionnement qui a été décrit ci-dessus est réalisé grâce à un automatisme, programmé en conséquence, pour commander les déplacements des différents éléments de l'enrouleuse 1.

Grâce à la substitution très rapide du premier rouleau aval 12 par le second rouleau aval 17, lors de l'évacuation de la première balle terminée 41', il n'y a pas nécessité d'arrêter l'enrouleuse 1 dans sa progression, la zone de formation 10a n'étant inactive que pendant un temps très court (figure 7).

Avantageusement, le moyen de fourniture 200 est configuré pour positionner la radio-étiquette dans une portion de la balle qui n'est pas directement sous les fils de liage disposés autour de la balle après sa formation et/ou au cours de sa fabrication. Afin d'éviter que la pression exercée par les fils de liage ne vienne abîmer la radio-étiquette 100, le moyen de fourniture peut être configuré pour positionner la radio-étiquette 100 dans une portion de la balle située entre deux fils de liage.

La présente invention n'est pas limitée au mode de réalisation qui a été décrit à titre d'exemple non exhaustif. En particulier, il pourrait y avoir un nombre plus important de rouleaux aval de substitution, mais cela pourrait rendre la fabrication plus complexe. De plus le rouleau amont de la zone de formation pourrait être déplaçable et remplir également le rôle de rouleau aval de substitution.

Ainsi, grâce à la présente invention, il devient possible de fournir aisément et de manière fiable, des informations relatives à des tiges végétales enroulées, en même temps que la balle de tiges végétales. La radio-étiquette permet notamment une lecture rapide et aisée à distance de données, sans nécessiter une récupération de la radio-étiquette dans la balle, et sans nécessiter de protection particulière. Il devient aussi possible de compter automatiquement le nombre de balles comprises sur une remorque, par passage dans un cadre de lecteurs RFID. En particulier, un tel dispositif d'insertion d'une radio-étiquette dans une balle de tiges végétales, peut être adapté à tout type d'enrouleuse, ce qui permet de les améliorer sans avoir à les remplacer.

## Revendications

1. Machine (1) de mise en balle ronde de tiges végétales, par exemple disposées sur le sol et de préférence sous forme de nappe continue, ladite machine (1) étant configurée pour former ladite balle ronde par enroulement en spirale des tiges végétales, de préférence de ladite nappe continue, dans laquelle la machine (1) comporte un moyen de fourniture (200) d'un récepteur radiofréquence (100), de préférence une radio-étiquette, et en ce que le moyen de fourniture (200) est configuré pour insérer le récepteur radiofréquence (100) dans la ou les dernières spires de la balle ronde formée par la machine (1).

2. Machine (1) selon la revendication 1, dans laquelle le récepteur radiofréquence (100) comprend une puce électronique et une antenne radiofréquence reliée à ladite puce électronique.

3. Machine (1) selon la revendication 1 ou 2, comprenant des moyens de ramassage (4) configurés pour prélever les tiges végétales sur le sol, de préférence sous forme de nappe continue, et des moyens de mise en forme (8, 9, 10a) de la balle ronde à partir des tiges végétales, de préférence à partir de ladite nappe continue, montés en aval des moyens de ramassage (4).

4. Machine (1) selon la revendication précédente, dans laquelle le moyen de fourniture (200) est monté en aval des moyens de ramassage (4), et de préférence en amont des moyens de mise en forme (8, 9, 10a) de la balle ronde.

5. Machine (1) selon l'une quelconque des revendications précédentes, comprenant également un lecteur radiofréquence (300) configuré pour lire le récepteur radiofréquence après son insertion dans la balle ronde en formation, ou bien dans la balle ronde formée par la machine.

6. Machine (1) selon la revendication précédente, dans laquelle le lecteur radiofréquence (300) est configuré pour lire le récepteur radiofréquence (100) après son insertion dans la balle ronde en formation, et dans laquelle le moyen de fourniture (200) est configuré pour insérer un deuxième récepteur radiofréquence (100) dans la ou les dernières spires de la balle ronde formée par la machine, lorsque le premier récepteur radiofréquence (100) ne peut pas être lu par le lecteur radiofréquence (300).

7. Machine (1) selon la revendication 5, dans laquelle le lecteur radiofréquence (300) est monté à proximité des moyens de mise en forme (8, 9, 10a) de la balle ronde ou en sortie de la machine (1).

8. Machine (1) selon l'une quelconque des revendications précédentes, comprenant également un moyen d'écriture configuré pour enregistrer des informations sur le récepteur radiofréquence (100).

9. Machine (1) selon l'une quelconque des revendications précédentes, dans laquelle le moyen de fourniture (200) est configuré pour déposer le récepteur radiofréquence (100) sur les tiges végétales, de préférence sur la nappe continue.

10. Machine (1) selon l'une quelconque des revendications précédentes, dans laquelle le récepteur radiofréquence (100) est en matière recyclable, et/ou compostable.
